# FASCICULE DE BREVET EUROPEEN

(11) **EP 0 470 549 B1**
(45) Date de publication et mention de la délivrance du brevet: **20.04.1994**
(21) Numéro de dépôt: 91113134.0
(22) Date de dépôt: 05.08.1991
(51) Int. Cl.: B61D 17/18, B60R 13/08, B32B 15/14, B32B 15/04

(54) **Panneau de garnissage anti-vandalisme**
Verkleidungsplatte gegen Vandalismus
Anti vandalism lining panel

(30) Priorité: 08.08.1990 FR 9010122
(43) Date de publication de la demande: 12.02.1992
(73) Titulaire: GEC ALSTHOM SA, 75116 Paris (FR)
(72) Inventeur: Guiot, Jean-Luc, F-59111 Lieu St Amand (FR); Eyzop, Bernard, F-59880 Saint Saulve (FR)
(74) Mandataire: Weinmiller, Jürgen

(56) Documents cités:
- EP-A- 0 006 231
- EP-A- 0 220 651
- DE-A- 2 517 727
- FR-A- 1 579 770
- GB-A- 1 541 675
- WORLD PATENTS INDEX LATEST Accession No. 88-238026 Week34 Derwent Publications Ltd., London GB & JP-A-63170026 (ASAHI CHEM. IND. KK) 13-07-88

## Description

L'invention concerne un panneau de garnissage anti-vandalisme destiné à l'aménagement intérieur des véhicules de transport en commun et notamment à l'aménagement intérieur des compartiments de véhicules ferroviaires.

L'intérieur des compartiments de véhicules ferroviaires destinés au transport des voyageurs est souvent soumis à de nombreuses dégradations. C'est le cas notamment des matériels de transport guidés ou non. Elles subissent en particulier des agressions répétées consistant en des graffiti effectués avec des bombes de peinture ou des feutres.

Le nettoyage des surfaces agressées constitue une charge supplémentaire et très contraignante dans l'entretien normal des véhicules, surtout que ces agressions sont en constante augmentation. Malgré l'intervention d'équipes spécialisées, le garnissage des véhicules conserve des traces indélébiles.

La plus grande partie de l'intérieur des véhicules est garnie de panneaux autoportants en stratifié à base de résines thermodurcissables d'une épaisseur égale à environ 3 mm. Le reste est garni de tôles d'aluminium prélaquées, de pièces en polyester moulé, de diverses pièces métalliques peintes, l'ensemble ayant un aspect brillant.

Les panneaux en statifié, constituant donc la plus grande surface intérieure des véhicules, se nettoient difficilement. En effet, l'encre pénètre dans les nombreux pores de ce matériau et le nettoyage ne peut être que superficiel. Ceci pose un réel problème aux constructeurs de véhicules ferroviaires à qui on demande de trouver de nouveaux panneaux de garnissage résistant au vandalisme et qui possèdent les qualités des panneaux en stratifié, c'est-à-dire d'être autoportants, minces, légers et de pouvoir être mis en forme facilement.

Il est connu que l'émail est l'un des matériaux résistant le mieux au vandalisme. L'émail est une substance vitreuse strictement minérale et qui peut être à base de quartz, d'alumine, de soude, de borax, et... On obtient une tôle émaillée par dépôt d'émail sur une feuille de métal, déroulée en continu, généralement de l'acier.

L'émail est très résistant à la rayure, à l'abrasion. Il est pratiquement insensible aux acides et aux solutions alcalines ou organiques. Il est insensibles aux rayons ultra-violets et aux intempéries. Il ne vieillit pratiquement pas et conserve indéfiniment son éclat. Une caractéristique remarquable est qu'il ne possède pratiquement pas de pores ce qui en fait un matériau idéal contre les graffiti.

On peut donc penser à utiliser de la tôle émaillée pour réaliser des panneaux de garnissage de véhicules ferroviaires. Cependant, une tôle émaillée épaisse est difficile à mettre en forme et un choc peut provoquer des destructions importantes en forme de cratère. Son poids trop élevé est aussi un inconvénient.

Une tôle émaillée trop fine ne convient pas non plus. Dans ce cas elle n'est plus autoportante et elle garde un bombé naturel à l'état libre.

Il est connu par GB- 1 541 675, pour une utilisation dans le bâtiment, d'associer une tôle émaillée à un support massif. On peut ainsi coller une tôle émaillée sur une plaque de plâtre cartonnée, un panneau de particules, de contre-plaqué ou une plaque de fibrociment.

Le document EP-A- 0 220 651 décrit un panneau de garnissage conforme au préambule de la revendication 1.

La présente invention a été conçue pour remédier aux problèmes posés par les graffiti, notamment dans les véhicules ferroviaires, sans pour autant porter préjudice aux autres qualités requises pour les panneaux de garnissage, c'est-à-dire la minceur, la légèreté et la facilité de mise en forme. La solution proposée consiste à utiliser une mince feuille de métal émaillé et à la rendre solidaire d'un support en matériau stratifié qui rende l'ensemble mince, léger et commode à mettre en forme.

L'invention a donc pour objet un panneau de garnissage anti-vandalisme destiné à l'aménagement intérieur des véhicules de transport en commun et notamment à l'aménagement intérieur des compartiments de véhicules ferroviaires, comportant une feuille de métal émaillé solidaire d'un support constitué par un matériau stratifié, l'ensemble formant une structure autoportante , caractérisé en ce que le matériau stratifié est formé de plis de fibre de verre et de résine phénolique.

Le métal sera avantageusement de l'acier et le matériau stratifié à base de plis de fibre de verre et de résine phénolique.

En fonction de l'utilisation, le matériau stratifié peut présenter une structure ajourée ou être associé à un produit amortissant.

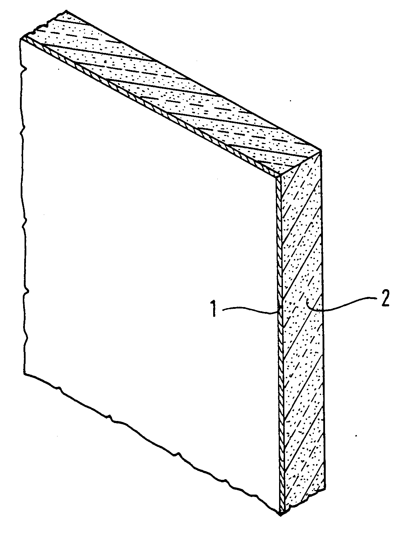

L'invention sera mieux comprise et d'autres avantages apparaîtront à la lecture de la description qui va suivre, donnée à titre non limitatif accompagnée par la figure annexée qui représente un panneau de garnissage selon l'invention.

Le panneau de garnissage selon l'invention est donc un panneau composite mince comprenant deux couches distinctes comme le représente la figure annexée. Ce panneau comprend une feuille ou tôle 1 en métal émaillé, la face émaillée étant la face visible, et un support 2 en matériau stratifié.

Le métal constituant la tôle peut avantageusement être de l'acier, la tôle étant émaillée en continu. Ce produit est commercialisé en bobine ou en panneau découpé. Une tôle d'épaisseur totale de 0,6 mm (dont environ 0,2 mm pour le revêtement d'émail) est particulièrement intéressante. Une telle tôle présente une grande dureté superficielle de l'émail de surface, une absence quasi absolue de pores et une possibilité d'aspect brillant.

Le matériau stratifié est par définition une matière rigide et légère constituée de couches alternées de plastique et de textile ou de fibre de verre. Pour obtenir une rigidité suffisante, on utilise une couche constituée de plis de fibre de verre et de résine phénolique.

Il est possible d'adapter la rigidité des panneaux de garnissage, en fonction des dimensions des zones à garnir ou pour obtenir des panneaux cintrables facilement, en faisant varier le nombre de plis de verre et leur graminage.

L'assemblage de la tôle émaillée et du support stratifié phénolique peut être réalisé de diverses manières. On peut les assembler à l'aide d'une colle époxydique. On peut aussi réaliser l'assemblage par stratification directe du composite phénolique sur la tôle émaillée au moment du moulage du stratifié.

On obtient ainsi un panneau composite possédant une grande résistance au vandalisme, une masse équivalente au panneau simplement stratifié et utilisé actuellement, un aspect identique aux revêtements synthétiques utilisés actuellement en complément des panneaux. A cause de la faible épaisseur de l'émail, ce panneau présente une bonne résistance aux impacts.

Pratiquement le panneau selon l'invention présentera les avantages et les caractéristiques suivants pour une utilisation dans les véhicules ferroviaires :
- une épaisseur maximum de 3 mm, c'est-à-dire identique au panneau utilisé actuellement,
- un module d'élasticité pour le stratifié (constitué de plis de fibre de verre et de résine phénolique) de 12 000 N/mm², donc supérieur à celui du stratifié utilisé actuellement (à base de résines thermodurcissables) et qui est de 9000 N/mm²,
- une masse surfacique pour le panneau comprise entre 4 et 6 kg/m² au lieu de 4,5 kg/m² pour le panneau de l'art antérieur,
- un nettoyage facile : des essais réalisés dans un véhicule en service ont démontré que les graffiti se nettoient facilement, sans produits spéciaux et que l'opération de nettoyage peut être classée dans l'entretien courant des voitures,
- une mise en oeuvre simple : le découpage et le perçage ne nécessitent pas de moyens spéciaux et la tôle accepte des cintrages d'un rayon de 160 mm,
- le composite verre-résine phénolique a un classement au feu du type M1,
- malgré la faible épaisseur du support, le panneau est un complexe stable faisant disparaître complètement le bombé de la tôle émaillée,
- le stratifié verre-résine phénolique a une capacité d'amortissement des phénomènes de résonance de la couche d'acier émaillé.

Le panneau de garnissage selon l'invention a été conçu en vue d'une utilisation comme garnissage de véhicules ferroviaires de transport de voyageurs, mais de tels panneaux peuvent aussi être utilisés comme structure de garnissage dans d'autres domaines.

Il entre également dans le cadre de la présente invention d'utiliser un support qui ne présente pas une surface continue mais qui peut présenter des défauts de matière, ou un matériau amortissant par exemple sous forme d'alvéoles ou une structure en nid d'abeille.

## Revendications

1. Panneau de garnissage anti-vandalisme destiné à l'aménagement intérieur des véhicules de transport en commun et notamment à l'aménagement intérieur des compartiments de véhicules ferroviaires, comportant une feuille de métal émaillé (1) solidaire d'un support (2) constitué par un matériau stratifié, l'ensemble formant une structure autoportante , caractérisé en ce que le matériau stratifié est formé de plis de fibre de verre et de résine phénolique.

2. Panneau de garnissage selon la revendication 1, caractérisé en ce que le métal est de l'acier.

3. Panneau de garnissage selon l'une quelconque des revendications 1 à 2, caractérisé en ce que le matériau stratifié présente une structure ajourée.

## Patentansprüche

1. Verkleidungstafel zum Schutz gegen Vandalismus, für die Innenausstattung von Fahrzeugen des öffentlichen Verkehrs und insbesondere der Innenausstattung der Abteile von Schienenfahrzeugen, mit einer Folie aus emailliertem Metall (1), die fest mit einem Träger (2) verbunden ist, der aus einem Schichtmaterial besteht, wobei die Einheit eine selbsttragende Struktur bildet, dadurch gekennzeichnet, daß das Schichtmaterial aus Glasfasermatten und Phenolharz gebildet wird.

2. Verkleidungstafel nach Anspruch 1, dadurch gekennzeichnet, daß das Metall Stahl ist.

3. Verkleidungstafel nach einem beliebigen der Ansprüche 1 und 2, dadurch gekennzeichnet, daß das Schichtmaterial eine Lochstruktur hat.

## Claims

1. Anti-vandalism lining panel for fitting out the interior of public transport vehicles and in particular for fitting out the interior of railway carriage compartments comprising an enamelled metal sheet (1) fastened to a support (2) consisting of a laminate material, the combination forming a self-supporting structure, characterised in that the laminate material is glassfibre-reinforced phenolic resin.

2. Lining panel according to claim 1 characterised in that the metal is steel.

3. Lining panel according to claim 1 or claim 2 characterised in that the laminate material has an apertured structure.
